(19) Europäisches Patentamt
European Patent Office
Office européen des brevets

(11) EP 3 633 003 A1

(12) # EUROPEAN PATENT APPLICATION
published in accordance with Art. 153(4) EPC

(43) Date of publication:
**08.04.2020 Bulletin 2020/15**

(21) Application number: **18809382.7**

(22) Date of filing: **25.05.2018**

(51) Int Cl.:
***C09J 7/29*** *(2018.01)* ***B32B 27/30*** *(2006.01)*
***B32B 27/40*** *(2006.01)* ***C09D 4/02*** *(2006.01)*
***C09D 133/16*** *(2006.01)* ***C09D 175/14*** *(2006.01)*
***C09J 201/00*** *(2006.01)*

(86) International application number:
**PCT/JP2018/020147**

(87) International publication number:
**WO 2018/221405 (06.12.2018 Gazette 2018/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2017 JP 2017107402**

(71) Applicant: **JNC Corporation**
**Chiyoda-ku**
**Tokyo 100-8105 (JP)**

(72) Inventors:
- **SATO Shino**
**Ichihara-shi**
**Chiba 290-8551 (JP)**
- **ITO Kenya**
**Ichihara-shi**
**Chiba 290-8551 (JP)**
- **IIZUKA Hiroyuki**
**Ichihara-shi**
**Chiba 290-8551 (JP)**

(74) Representative: **Becker & Kurig Partnerschaft**
**Patentanwälte PartmbB**
**Bavariastrasse 7**
**80336 München (DE)**

(54) **LAYERED FILM**

(57) [Problem] To provide a layered film that is suitable for use as a PPF material. [Solution] A layered film in which the following are disposed in contact in the order given: a coating layer comprising a cured product of a photopolymerizable coating liquid; a base material layer comprising a thermoplastic polyurethane; and an adhesive layer comprising a pressure-sensitive adhesive. The photopolymerizable coating liquid comprises: component (a), a urethane acrylate; and component (b), a photopolymerizable acrylic compound which does not include a urethane unit and which contains a fluorine atom. Component (a) and component (b) are mixed at proportions such that the proportion of the component (a) is at least 20 wt% and less than 50 wt% and the proportion of the component (b) is at least 50 wt% and less than 80 wt% relative to 100 parts by weight of the photopolymerizable coating liquid.

EP 3 633 003 A1

## Description

### Technical Field

The invention relates to a laminated film usable as a material of a paint protection film.

### Background Art

A paint protection film (PPF) is a film-form product used for protecting a surface of an industrial product used outdoors. A basic structure of the PPF is a laminate including at least two layers of a base material formed of a flexible and transparent resin film and an adhesive layer. In general, the PPF is supplied into a market in a state of a laminated film further having a coating layer for enhancing a stain-proof function and scratch resistance on a surface opposite to the adhesive layer of the base material, and a release layer on a surface opposite to the base material of the adhesive layer. Upon using the PPF, first, the PPF is cut according to a surface site to be protected, and the adhesive layer of the cut PPF is closely adhered to an objective surface. A product a surface of which is coated with the PPF is protected from dirt or scratch caused by various stimulations from an external world, for example, weather, dust, sand, river water, microorganisms, contact with animals and plants or insects or excretion therefrom, and so forth, in a state in which a coating, a shape and an appearance are not spoiled. Specifically, the PPF serves as a so-called cushion to interfere pressure or impact blow from the external world or the PPF repels rain water or filth, whereby an influence of the stimulation from the external world on the product itself is suppressed.

Such a PPF has been initially developed for the industrial product such as an airplane to be used under a severe environment, but is now spreading as a surface protection member of a body of an automobile or a motorbike. For example, a roof, a bonnet, a front, a door and a trunk door of the automobile are coated with the PPF, whereby the body can be protected from bird's droppings, insect carcasses, a footprint or a mischief of a cat, a scratch by load carrying out and a scratch by flying stones, and so forth, which tend to bother a driver. Ordinarily, the dirt on the surface of the PPF can be easily removed by washing a PPF-coated surface with water, and therefore the PPF can exhibit a function thereof over a comparatively long period of time. The PPF used for a predetermined period of time is peeled from the body and can be easily exchanged with a new PPF.

Spread of a vehicle such as the automobile and the motorbike in every corner of the world in recent years has required the PPF usable under a wider range of environment, for example, under a severer climate as in a cold district, a tropical zone and a dry land. Furthermore, in association with expansion of a market of the PPF, the PPF that can be further easily and appropriately worked even by an operator having no special skill has been desired. Accordingly, the PPF in recent years has been required to have various performance such as flexibility to be adapted to a varied surface shape of the automobile, the motorbike or the like, durability to withstand the stimulation from the external world over a long period of time, transparency and smoothness without spoiling appearance of the product itself, and good releasability upon replacement.

As such a PPF, for example, Patent literature No. 1 describes provision of a PPF excellent in pasting characteristics and suppressed in an adhesive deposit by laminating a base material film and an adhesive layer in which surface roughness is controlled. However, in the PPF, no specific studies have been made on a stain-proof layer to be added on a surface of the base material film, in which a problem has remained on practicality to an automobile or a motorbike appearance of which is emphasized.

Moreover, for example, Patent literature No. 2 describes a PPF in which a first layer including polyurethane, a second layer including thermoplastic polyurethane and a third layer including a pressure sensitive adhesive are laminated in the order. However, further improvement in various performance is required even for the PPF.

### Citation List

### Patent Literature

Patent literature No. 1: JP 2016-20079 A.
Patent literature No. 2: JP 2008-539107 A.

## Disclosure of Invention

### Technical Problem

Then, the present inventors have diligently searched for a configuration of an optimum laminate by placing further improvement in various performance of a PPF as an object.

### Solution to Problem

As a result, the present inventors have found that a coating layer formed of a cured material of a specific photopolymerizable coating liquid containing a fluorine atom is formed on a base material layer formed of thermoplastic polyurethane, a PPF having a protection function such as stain-proof properties, stain-proof continuity and water repellency combined with flexibility to easily adhere to a coated surface can be obtained. More specifically, the invention is as described below.

Item 1. A laminated film, in which a coating layer formed of a cured material of a photopolymerizable coating liquid, a base material layer formed of thermoplastic polyurethane, and an adhesive layer formed of a pressure sensitive adhesive are formed in contact with each other in the order, wherein
the photopolymerizable coating liquid contains, as a photopolymerizable component, component (a): urethane acrylate and component (b): photopolymerizable acrylic compounds having no urethane unit and containing a fluorine atom, and
component (a) and component (b) are mixed at a proportion of (a): 20% by weight or more and less than 50% by weight and (b): 50% by weight or more and less than 80% by weight, based on a total amount of 100 parts by weight of the photopolymerizable component.
Item 2. The laminated film according to item 1, wherein component (b) contains a photopolymerizable acrylic polymer containing a fluorine atom and silicon.
Item 3. The laminated film according to item 1 or 2, wherein component (b) contains a structural unit derived from a fluorosilsesquioxane derivative represented by formula (1):

Formula 1

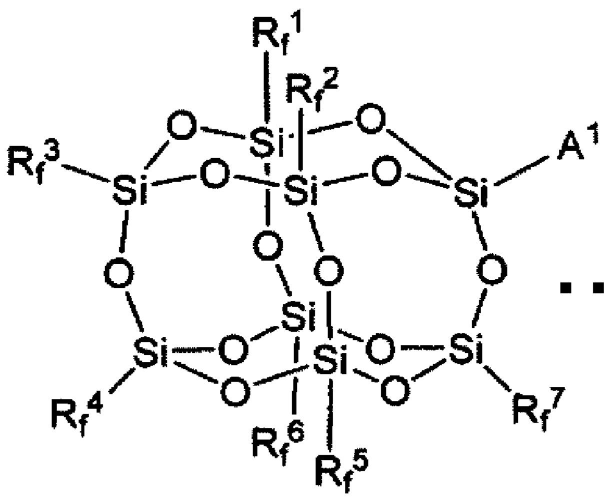

····(1)

wherein, in formula (1), $R_f^1$ to $R_f^7$ independently represent straight-chain or branched-chain fluoroalkyl having 1 to 20 carbons in which arbitrary methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and $A^1$ is a group represented by formula (1-1) or formula (1-2):

**Formula 2**

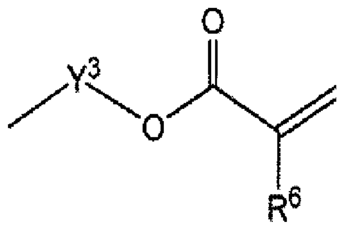

····(1-1)

wherein, in formula (1-1), $Y^3$ represents alkylene having 2 to 10 carbons, and preferably alkylene having 2 to 6 carbons, and $R^6$ represents hydrogen, or straight-chain or branched-chain alkyl having 1 to 5 carbons, or aryl having 6 to 10 carbons, and preferably hydrogen or alkyl having 1 to 3 carbons:

**Formula 3**

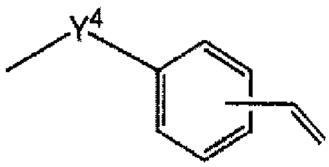

····(1-2)

wherein, in formula (1-2), $Y^4$ represents a single bond or alkylene having 1 to 10 carbons.

Item 4. The laminated film according to any one of items 1 to 3, wherein component (b) contains a structural unit derived from γ-methacryloxypropylhepta(trifluoropropyl)-T8-silsesquioxane represented by formula (1-3):

**Formula 4**

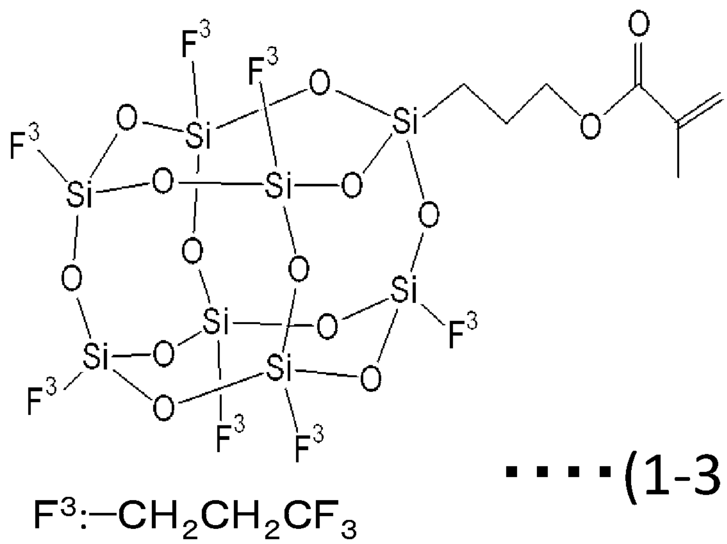

····(1-3)

$F^3$:$-CH_2CH_2CF_3$

.

Item 5. A paint protection film (PPF), containing the laminated film according to any one of items 1 to 4.

## Advantageous Effects of Invention

A laminated film of the invention is excellent in workability, and also has water repellency, stain-proof properties, stain-proof continuity, oil repellency, flexibility, extensibility, squeegee sliding properties and designability (smoothness) with a good balance. Such a laminated film of the invention is preferred as a material of a PPF.

## Brief Description of Drawings

Fig. 1 schematically shows one example of a laminated film of the invention, in which a release layer is provided.
Fig. 2 schematically shows a state in which the laminated film of the invention is used as a PPF.

## Description of Embodiments

In a laminated film of the invention, a coating layer, a base material layer formed of thermoplastic polyurethane and an adhesive layer formed of a pressure sensitive adhesive are in contact with each other in the order. The coating layer is a layer formed on the base material layer by applying a specific photopolymerizable coating liquid containing a fluorine atom to a surface of the base material layer, and curing the coating. Hereinafter, each layer constituting the laminated film of the invention will be described in detail.

### 1. Coating layer

The coating layer constituting the laminated film of the invention is coated with a resin obtained by curing a photopolymerizable coating liquid composed of component (a): urethane acrylate (a photocurable urethane acrylate oligomer) and component (b): photopolymerizable acrylic compounds having no urethane unit and containing a fluorine atom, on the base material layer, in the presence of a polymerization initiator. A thickness of the coating layer is generally 1 to 100 micrometers, preferably 5 to 50 micrometers, and further preferably 5 to 30 micrometers.
A structure of a polymer constituting such a coating layer is complicated, and cannot be represented by a single repeating unit or a uniform structural formula. In the invention, the polymer constituting the coating layer is defined by a composition of the photopolymerizable raw material, more specifically, a photopolymerizable monomer or oligomer contained in the photopolymerizable coating liquid, and a quantitative ratio of the above compounds in the raw material.

### 1.1. Component (a): urethane acrylate

The photopolymerizable coating liquid used upon formation of the coating layer contains component (a): urethane acrylate with a concentration of 20% by weight or more and less than 50% by weight, and preferably 30% by weight or more and less than 50% by weight.
The urethane acrylate is a generic term for an oligomer-like compound having a reactive acryloyl group at a terminal to be obtained by a reaction of an isocyanate compound, polyol, a hydroxyl group-containing (meth)acrylic monomer and an isocyanate group-containing (meth)acrylic monomer.
The urethane acrylate used in the invention is typically ultraviolet-curable urethane acrylate, and preferably urethane acrylate formed by allowing one or more kinds of polyol compounds selected by (i) an isocyanate compound composed of an aliphatic isocyanate compound and/or an alicyclic isocyanate compound, (ii) ester-based polyol, (iii) ether-based polyol or (iv) polycarbonate-based polyol to react with (v) an acrylate compound having a hydroxyl group.
Specific examples of (i) the aliphatic isocyanate compound include hexamethylene diisocyanate, an isocyanurate modified body of hexamethylene diisocyanate, and trimethylhexamethylene diisocyanate. Specific examples of the alicyclic isocyanate compound include isophorone diisocyanate, 4,4'-dicyclohexyl methane isocyanate and hydrogenated xylene diisocyanate.
Specific examples of (ii) the ester-based polyol include an ester compound formed by allowing diols to react with dicarboxylic acid. Specific examples of the diols include 3-methyl-1,5-pentanediol, neopentyl glycol, ethylene glycol, diethylene glycol, propylene glycol, dipropylene glycol, 1,3-butanediol, 1,4-butanediol, 1,6-hexandiol, 2-methyl-1,8-octanediol and 1,9-nonanediol. Specific examples of the dicarboxylic acid include sebacic acid, adipic acid, dimer acid, succinic acid, azelaic acid, maleic acid, terephthalic acid, isophthalic acid and citraconic acid, and may include an anhydride thereof.
Specific examples of (iii) the ether-based polyol include polyetherdiol, poly(oxytetramethylene)glycol and poly(oxybutylene)glycol. Specific examples of the polyetherdiol include polypropylene glycol, polyethylene glycol, polytetramethylene glycol and propylene-modified polytetramethylene glycol.

Specific examples of (iv) the polycarbonate-based polyol include a reaction product between a carbonate derivative and diols. Specific examples of the carbonate derivative include diallyl carbonate such as diphenyl carbonate, dimethyl carbonate and diethyl carbonate. Moreover, specific examples of the diols include the compounds described above.

Specific examples of (v) the acrylate compound having a hydroxyl group include 2-hydroxyethyl (meth)acrylate, 2-hydroxypropyl (meth)acrylate, 2-hydroxybutyl (meth)acrylate, 4-hydroxybutyl methacrylate, polyethyleneglycol mono(meth)acrylate and polypropyleneglycol mono(meth)acrylate.

In production of such urethane acrylate, the isocyanate compound, the polyol compound and the acrylate compound having a hydroxyl group, which are essential components, can be allowed to react by charge in batch. Alternatively, the (meth)acrylate compound having the hydroxyl group is allowed to react with the isocyanate compound to once produce a prepolymer having an excessive isocyanate group, and then the residual isocyanate group can be allowed to react with the polyol compound. Alternatively, the isocyanate compound is allowed to react with the polyol compound to once produce a prepolymer having an excessive isocyanate group, and then the residual isocyanate group can be allowed to react with the (meth)acrylate compound having the hydroxyl group. The urethane acrylate produced by the above techniques preferably has a polyurethane chain.

In the invention, SHIKOH UT-5569 made by The Nippon Synthetic Chemical Industry Co., Ltd., AUP-838 made by TOKUSHIKI CO., Ltd., and RUA-062S, RUA-058SY2 made by Asia Chemical Industry Co., Ltd., which are commercially available products, can be used.

### 1.2. Component (b): photopolymerizable acrylic compounds having no urethane unit and containing a fluorine atom

The photopolymerizable coating liquid used upon formation of the coating layer contains, as a component to be photocopolymerized with component (a), component (b): photopolymerizable acrylic compounds having no urethane unit and containing a fluorine atom with a concentration of 50% by weight or more and less than 80% by weight, preferably 50% by weight or more and less than 70% by weight.

Component (b) may be composed of one kind of photopolymerizable acrylic compound, or may be composed of two or more photopolymerizable acrylic compounds containing at least one kind of fluorine atom-containing photopolymerizable acrylic compound.

As the fluorine atom-containing photopolymerizable acrylic compound, a photocurable acrylic monomer and/or oligomer having a fluorine atom in a molecule, for example, a commercially available product of a fluorine-based (meth)acrylate compound such as OPTOOL DAC-HP (made by DAIKIN INDUSTRIES, LTD), MEGAFAC RS-75 (made by DIC Corporation) and VISCOAT V-3F (made by OSAKA ORGANIC CHEMICAL INDUSTRY LTD.) can be used. Such a fluorine-based (meth)acrylate compound is preferably allowed to exist at a proportion of generally 0.1 part by weight to 10 parts by weight, preferably 1 part by weight to 7 parts by weight.

Moreover, as the fluorine atom-containing photopolymerizable acrylic compound, a compound further containing a silicon atom can also be used. As such a photopolymerizable acrylic compound containing the silicon atom and the fluorine atom, fluorosilsesquioxane derivative (1) represented by general formula (1) can be used.

Formula 5

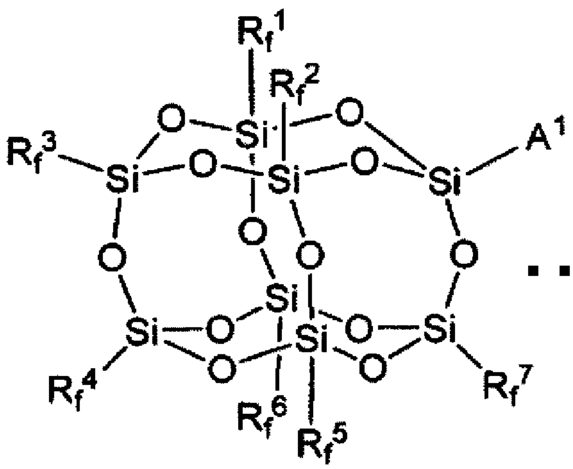

····(1)

In formula (1), $R_f^1$ to $R_f^7$ independently represent straight-chain or branched-chain fluoroalkyl having 1 to 20 carbons in which arbitrary methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and $A^1$ is a group represented by formula (1-1) or formula (1-2) .

$R_f^1$ to $R_f^7$ in formula (1) preferably independently represent 3,3,3-trifluoropropyl, 3,3,4,4,4-pentafluorobutyl, 3,3,4,4,5,5,6,6,6-nonafluorohexyl, tridecafluoro-1,1,2,2-tetrahydrooctyl, heptadecafluoro-1,1,2,2-tetrahydrodecyl, henicosafluoro-1,1,2,2-tetrahydrododecyl, pentacosafluoro-1,1,2,2-tetrahydrotetradecyl, (3-heptafluoro isopropoxy)propyl, pentafluorophenylpropyl, pentafluorophenyl or $\alpha,\alpha,\alpha$-trifluoromethylphenyl.

$R_f^1$ to $R_f^7$ in formula (1) further preferably independently represent 3,3,3-trifluoropropyl or 3,3,4,4,5,5,6,6,6-nonafluorohexyl.

Formula 6

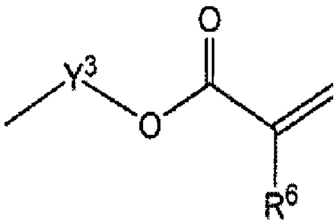

····(1-1)

In formula (1-1), $Y^3$ represents alkylene having 2 to 10 carbons, and preferably alkylene having 2 to 6 carbons, and $R^6$ represents hydrogen or straight-chain or branched-chain alkyl having 1 to 5 carbons or aryl having 6 to 10 carbons, preferably hydrogen or alkyl having 1 to 3 carbons.

Formula 7

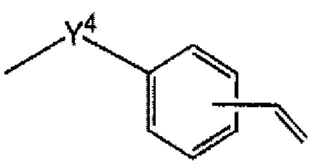

····(1-2)

In formula (1-2), $Y^4$ is a single bond or alkylene having 1 to 10 carbons.

Fluorosilsesquioxane derivative (1) is produced by a method described below. First, silicon compound (2) having a trifunctional hydrolytic group represented by formula (2) is hydrolyzed and polycondensed in an oxygenated organic solvent in the presence of an alkali metal hydroxide to produce compound (3) represented by formula (3).

Formula 8

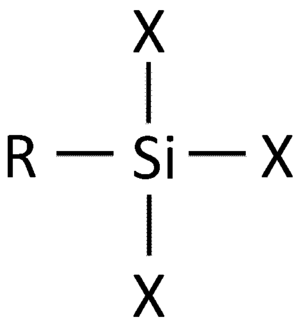

····(2)

Formula 9

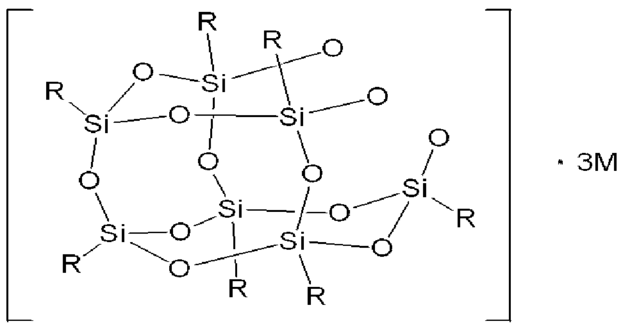

····(3)

In formula (3), M is not particularly limited, as long as M is alkali metal. Specific examples of such alkali metal include lithium, sodium, potassium and cesium.

R's in formulas (2) and (3) independently correspond to one group selected from $R_f^1$ to $R_f^7$ in formula (1), and represent straight-chain or branched-chain fluoroalkyl having 1 to 20 carbons in which arbitrary methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and X represents a hydrolytic group.

R's in formulas (2) and (3) preferably independently represent 3,3,3-trifluoropropyl, 3,3,4,4,4-pentafluorobutyl, 3,3,4,4,5,5,6,6,6-nonafluorohexyl, tridecafluoro-1,1,2,2-tetrahydrooctyl, heptadecafluoro-1,1,2,2-tetrahydrodecyl, henicosafluoro-1,1,2,2-tetrahydrododecyl, pentacosafluoro-1,1,2,2-tetrahydrotetradecyl, (3-heptafluoroisopropoxy)propyl, pentafluorophenylpropyl, pentafluorophenyl or $\alpha,\alpha,\alpha$-trifluoromethylphenyl.

R's in formula (2) further preferably independently represent 3,3,3-trifluoropropyl or 3,3,4,4,5,5,6,6,6-nonafluorohexyl.

Next, fluorosilsesquioxane derivative (1) is obtained by allowing compound (3) to react with compound (4) represented by formula (4).

Formula 10

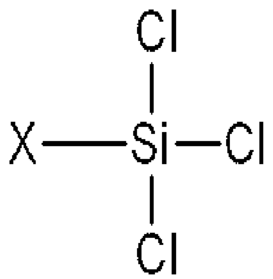

····(4)

Group X in formula (4) is a group represented by formula (1-1) or formula (1-2).

Among such fluorosilsesquioxane derivatives (1), γ-methacryloxypropylhepta(trifluoropropyl)-T8-silsesquioxane represented by formula (5) is preferred.

Formula 11

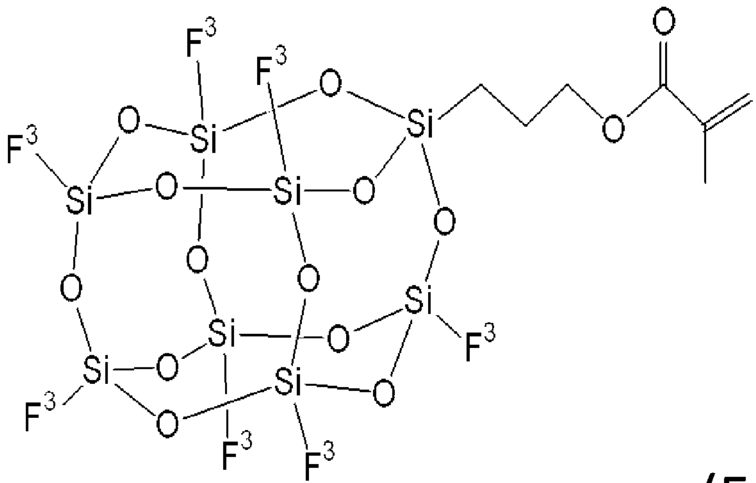

····(5)

$F^3$: $-CH_2CH_2CF_3$

If fluorosilsesquioxane derivative (1) such as γ-methacryloxypropylhepta(trifluoropropyl)-T8-silsesquioxane is introduced into the coating layer, a stain-proof function of the coating layer can be further improved. Upon incorporating fluorosilsesquioxane derivative (1) into the photopolymerizable acrylic compounds having no urethane unit and containing the fluorine atom, fluorosilsesquioxane derivative (1) may be directly mixed with other photopolymerizable acrylic compounds having no urethane unit and containing a fluorine atom, or an oligomer produced by previously crosslinking and/or polymerizing fluorosilsesquioxane derivative (1) with photopolymerizable acrylic compounds having no urethane unit may be mixed with other photopolymerizable acrylic compounds having no urethane unit and containing a fluorine atom.

In general, fluorosilsesquioxane derivative (1) is copolymerized with one or more kinds of acrylate-based copolymer components selected from the monofunctional acrylate, the bifunctional acrylate and the polyfunctional acrylate to previously produce a polymer having a fluorosilsesquioxane derivative (1) unit, and the polymer is used as a part of the photopolymerizable acrylic compounds having no urethane unit and containing the fluorine atom. In the above case, the polymer having the fluorosilsesquioxane derivative (1) unit is blended so as to have a proportion of 0.01 part by weight to 10 parts by weight, preferably 0.05 part by weight to 5 parts by weight based on 100 parts by weight of the urethane acrylate.

As the photocurable acrylic monomer and/or oligomer having the fluorine atom in the molecule or the photopolymerizable acrylic compounds having no urethane unit and containing the fluorine atom to be used with fluorosilsesquioxane derivative (1), a compound generally called the photocurable acrylic monomer, for example, monofunctional acrylate such as (meth)acrylic acid and (meth)acrylic acid ester, bifunctional acrylate such as (poly)alkylene glycol di(meth)acrylate, and trifunctional or more functional acrylate such as pentaerythritol triacrylate, or the like can be used. Such a copolymer component may be the oligomer obtained by polymerizing a reactive compound containing the photocurable acrylic monomer.

### 1.3. Polymerization initiator

As a polymerization initiator used for curing the photopolymerizable coating liquid containing component (a) and component (b), a material being distributed under the name of the photopolymerization initiator can be used without restriction. As such a photopolymerization initiator, for example, a polymer body of hydroxy ketone such as oligo{2-hydroxy-2-methyl-1-phenylpropaneone}, 1-hydroxydicyclohexyl phenyl ketone, 2-hydroxy-2-methyl-1-phenylpropane-1-one, 2,2-dimethoxy-1,2-diphenylethane-1-one, 1-{4(2-hydroxyethoxy)phenyl}2-hydroxy-2-methyl-1-propane-1-one, 2,4,6-trimethylbenzoyldiphenylphosphine oxide and bis(2,4,6-trimethylbenzoyl)phenylphosphine oxide, or the like can be used.

### 1.4. Additive

An additive such as an antioxidant, a weather-resistant stabilizer, a toning agent and a diluent, which are generally blended in the material of the paint or the film, can be blended to the coating layer. An amount to be blended is not limited, as long as the amount is in the range within the function of the coating layer is not reduced.

### 2. Base material layer

As the base material layer constituting the laminated film of the invention, a film composed of thermoplastic polyurethane is used. A publicly-known thermoplastic polyurethane film is used as such a film without restriction, but a film composed of polycarbonate-based thermoplastic polyurethane or a film composed of polycaprolactone-based thermoplastic polyurethane is generally used.

The polycaprolactone-based thermoplastic polyurethane is thermoplastic polyurethane formed by allowing a polycarbonate compound having a hydroxyl group at a terminal (polycarbonate diol) to react with an isocyanate compound, which is a block copolymer containing a polyurethane component as a hard segment and polycarbonate as a soft segment. As the polycarbonate, alkanediol carbonate, more specifically, carbonate mainly composed of alkanediol having 2 to 10 carbons is generally used, and polyhexandiol carbonate is used, for example. As the isocyanate compound, the above-described compounds are used.

As such polycarbonate-based thermoplastic polyurethane, for example, a compound having a soft segment block having a polycarbonate diol unit having the number average molecular weight of 500 to 10,000 and an organic diisocyanate unit, and a hard segment block having a chain elongation agent selected from organic diol having the number average molecular weight of 60 to 400 and an organic diisocyanate unit is used. Specific examples of such polycarbonate-based thermoplastic polyurethane include a compound having, as the soft segment block, a long-chain polyol unit composed of polyester-type polyol having a diethyl carbonate unit or a diphenyl carbonate unit, and a 1,6-hexandiol unit, and a 4,4'-diphenylmethane diisocyanate unit, and having, as the hard segment block, a 1,4-butanediol unit and a 4,4'-diphenylmethane diisocyanate unit.

Specific examples of the polycaprolactone-based thermoplastic polyurethane elastomer include a compound in which structural units formed of a soft segment composed of polymer (long-chain) diol and a hard segment composed of low-molecular (short-chain) diol and diisocyanate are bonded to each other with organic diisocyanate.

The polymer diol used in the soft segment is polycaprolactone. The number average molecular weight of the polymer diol is preferably 500 to 10,000. As the low-molecular diol used in the hard segment, diol having 2 to 50 carbons, for example, aliphatic dihydric alcohol having 2 to 15 carbons, alicyclic dihydric alcohol having 5 to 15 carbons, aromatic dihydric alcohol having 6 to 15 carbons, or the like can be used. Among the compounds, dihydric alcohol and dihydric phenol are preferred, aliphatic dihydric alcohol, monocycle dihydric phenol and bisphenol are further preferred, and ethylene glycol, hydroquinone and bisphenol A are particularly preferred.

As the organic diisocyanate used for the polycaprolactone-based thermoplastic polyurethane elastomer, any of or a mixture of two or more kinds of aromatic diisocyanate having 6 to 20 carbons (excluding a carbon in an isocyanate group NCO, the same hereinafter), aliphatic diisocyanate having 2 to 18 carbons, cycloaliphatic diisocyanate having 4 to 15 carbons and aromatic-aliphatic diisocyanate having 8 to 15 carbons can be used. Among the compounds, any of or a mixture of aromatic diisocyanate and aliphatic diisocyanate is preferred, any of or a mixture of tolylene diisocyanate (TDI), diphenylmethane diisocyanate (MDI) and hexamethylene diisocyanate (HDI) is further preferred, and HDI is

particularly preferred.

In the invention, a thickness of the base material layer is not particularly limited, and is ordinarily 25 to 300 micrometers, and preferably 100 to 200 micrometers. As such a base material layer, ARGOGUARD (registered trademark) made by Argotec GmbH can be used, for example.

### 3. Adhesive layer

The adhesive layer constituting the laminated film of the invention is formed of the pressure sensitive adhesive. As the pressure sensitive adhesive used in the invention, a publicly-known adhesive can be used without restriction, as long as the adhesive exhibits stickiness under a working temperature of the PPF, namely, at a temperature of about 20°C to about 30°C, and is used for adhesion between a molded product formed of a thermoplastic polyurethane-based material and an article such as glass, metal, plastic and paper. As such a pressure sensitive adhesive, a commercially available acrylic pressure sensitive adhesive and urethane-based pressure sensitive adhesive can be used, and an acrylic pressure sensitive adhesive is preferably used. A thickness of the adhesive layer is not particularly limited, and is ordinarily about 10 to 200 micrometers.

### 4. Release layer

On the adhesive layer constituting the laminated film of the invention, the release layer is preferably further laminated. As a material of the release layer, a publicly-known release material is used without restriction, and for example, a film made of a resin such as a polyester-based resin and a polyolefin-based resin, cellophane paper, glassine paper, and a material surface-coated with a fluorine-based or silicon-based release agent can be used. A thickness of the release layer is not particularly limited, and is ordinarily about 20 to 200 micrometers.

### 5. Protective layer

In the laminated film of the invention, an outer surface of the coating layer can be coated with the protective layer according to a form of storage, transport or sales thereof. A material of such a protective layer is not limited, and a plastic film such as a polyethylene film, release-treated paper sheets or the like, which is generally used, can be appropriately selected.

### Production of laminated film

As the method for producing the laminated film of the invention, a method suitable for formation and lamination of each layer can be employed without restriction. For example, when the laminated film of the invention has the release layer and the protective layer, the laminated film of the invention can be produced through steps described below.

First, an adhesive layer is formed on a release-treated surface of a release layer. Then, an opened surface of the adhesive layer formed is brought into close contact with one surface of a base material layer to produce a laminate in which the base material layer, the adhesive layer and the release layer are in contact with each other in the order. Then, the above-described photopolymerizable coating liquid is applied on an opened surface of the base material layer in the laminate obtained, and the applied surface is irradiated with ultraviolet light to cure the photopolymerizable coating liquid. When curing is completed, a laminate film in which the coating layer, the base material layer, the adhesive layer and the release layer are in contact with each other in the order is obtained. Further, an opened surface of the coating layer is coated with a protective film. Thus, a laminate film in which the protective layer, the coating layer, the base material layer, the adhesive layer and the release layer are in contact with each other in the order is obtained. The laminated film obtained is appropriately cut, wound up and packed.

### Utilization as a PPF

The laminated film thus completed is cut in an appropriate length unit, and loaded or wound up, and can be utilized as the PPF. When working on the PPF, the laminated film of the invention is cut into a shape according to a shape and a size of a coated surface, and the cut laminated film is extended with appropriate force, and the adhesive layer is closely adhered to the coated surface.

In the laminated film of the invention, the coating layer excellent in strength, smoothness, water repellency and oil repellency relieves stimulation from the external world to a worked surface. Meanwhile, a flexible base material layer is closely adhered to the coated surface through the adhesive layer. After the laminated film is used for a predetermined period of time, the laminated film can be removed without damaging the surface of the coated surface.

## Examples

### Production of polymer including γ-methacryloxypropylhepta(trifluoropropyl)-T8-silsesquioxane unit

First, γ-methacryloxypropylhepta(trifluoropropyl)-T8-silsesquioxane was prepared according to a procedure described below. Into a four-necked flask having an inner volume of 1 litter and equipped with a reflux condenser, a thermometer and a dropping funnel, trifluoropropyltrimetoxysilane (100 g), THF (500 mL), deionized water (10.5 g) and sodium hydroxide (7.9 g) were charged, and the resulting mixture was heated in an oil bath from room temperature to a temperature at which the THF was refluxed while stirring the mixture with a magnetic stirrer. Stirring was continued for 5 hours from reflux start to complete a reaction. Then, the flask was pulled up from the oil bath, and left to stand overnight at room temperature, and then the flask was set to the oil bath again, and the mixture was heated and concentrated under constant pressure until a solid precipitated.

The product precipitated was separated by filtration using a pressure filter provided with a membrane filter having a pore diameter of 0.5 micrometer. Then, the solid obtained was washed once with THF, and dried with a reduced pressure dryer at 80°C for 3 hours to obtain 74 g of a colorless powdery solid.

Into a four-necked flask having an inner volume of 1 litter equipped with a reflux condenser, a thermometer and a dropping funnel, the obtained solid (65 g), dichloromethane (491 g) and triethylamine (8.1 g) were charged, and the resulting mixture was cooled down to 3°C in an ice bath. Then, γ-methacryloxypropyltrichlorosilane (21.2 g) was added thereto, and heat generation was confirmed to cease, and then the flask was pulled up from the ice bath, and the resulting mixture was aged as was at room temperature overnight. The resulting mixture was washed 3 times with ion exchange water, and then a dichloromethane layer was dehydrated over anhydrous magnesium sulfate to remove magnesium sulfate by filtration. The resulting filtrate was concentrated with a rotary evaporator until a viscous solid precipitated, and 260 g of methanol was added thereto, and the resulting mixture was stirred until a powdery state was formed. The resulting powder was filtrated using a pressure filter provided with 5-μm filter paper, and the filtrate was dried at 65°C for 3 hours with a reduced pressure dryer to obtain 41.5 g of a colorless powdery solid. GPC and $^1$H-NMR measurement were carried out on the solid obtained to confirm formation of γ-methacryloxypropylhepta(trifluoropropyl)-T8-silsesquioxane (5) represented by formula (5).

Formula 12

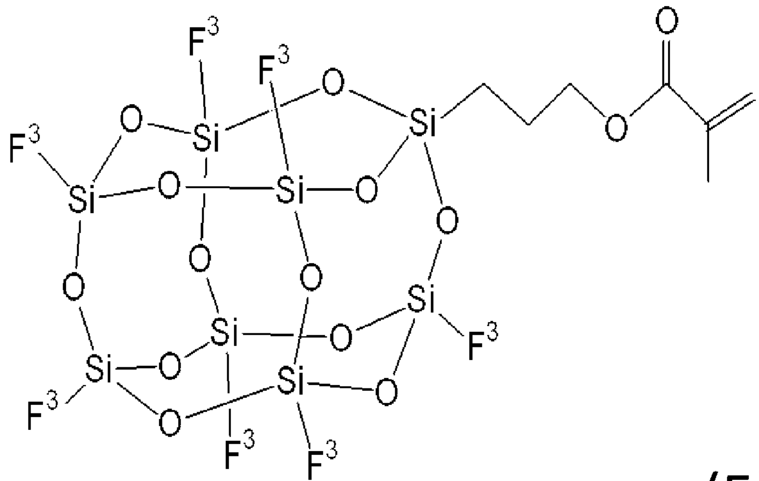

····(5)

$F^3$: $-CH_2CH_2CF_3$

Next, a polymer including a γ-methacryloxypropylhepta(trifluoropropyl)-T8-silsesquioxane unit was produced according to a procedure described below. Into a four-necked flask having an inner volume of 200 milliliters and equipped with a reflux condenser, a thermometer and a dropping funnel, 36.65 g of γ-methacryloxypropylhepta(trifluoropropyl)-T8-silsesquioxane (5) obtained by the method described above, 18.33 g of methyl methacrylate (MMA), 27.49 g of 2-hydroxyethyl methacrylate (HEMA), 9.16 g of dimethyl silicone modified with a methacryloxy group at one end (FM-0721, molecular weight: about 6,300) and 106.4 g of 2-butanone (MEK) were introduced, and the flask was sealed with nitrogen. The flask was set to an oil bath kept at 95°C to allow the resulting mixture to be refluxed, and then deoxidized for 10 minutes. Then, a solution in which 0.70 g of 2,2'-azobisisobutyronitrile (AIBN) and 0.08 g of mercaptoacetic acid

(AcSH) were dissolved in 7.0 g of MEK was introduced thereinto, and polymerization was started while being kept at a reflux temperature. After polymerization was performed for 3 hours, a solution in which 7.00 g of AIBN was dissolved in 7.0 g of MEK was introduced thereinto, and polymerization was further continued for 5 hours. After completion of polymerization, 65 milliliters of denatured alcohol (Solmix AP-1, made by Japan Alcohol Trading Co., Ltd.) was added to the polymerization liquid, and then the resulting mixture was poured into 1300 milliliters of Solmix AP-1 to allow a polymer to precipitate. A supernatant was removed, and a product was separated by reduced pressure drying (40°C, 3 hours, 70°C, 3 hours).

Into a four-necked flask having an inner volume of 200 milliliters and equipped with a reflux condenser, a thermometer and a septum cap, 15.0 g of the product, 0.015 g of MEHQ, 0.0263 g of DBTDL and 130 g of ethyl acetate were introduced, and the flask was sealed with nitrogen. The flask was set to an oil bath kept at 48°C, and was heated. Then, when a solution temperature reached 45°C, 15.9 g of acryloyloxyethyl isocyanate (AOI, made by Showa Denko K.K.) was introduced thereinto, and a reaction was started. After the reaction was performed for 6 hours, the temperature was reduced to room temperature, and 10.0 g of MeOH was introduced thereinto, and the reaction was completed. After completion of the reaction, 65 milliliters of Solmix AP-1 was added to the reaction mixture, and then 1300 milliliters of Solmix AP-1 was poured thereinto to allow a reactant to precipitate. A supernatant was removed, and the resulting material was subjected to reduced pressure drying (40°C, 3 hours, 70°C, 3 hours)to obtain 11.8 g of a polymer (XUA008) including a γ-methacryloxypropylhepta(trifluoropropyl)-T8-silsesquioxane unit and having an acryloyl group in a side chain. A weight average molecular weight determined by GPC analysis of XUA008 was 45,000, and a molecular weight distribution was 1.7.

## Preparation of photopolymerizable coating liquid

Components (a) and component (b) described below were used as a photopolymerizable compound. As component (a): urethane acrylate, a UV-curable self-healing paint "AUP-838 (a concentration of urethane acrylate being an effective component: 48.0% by weight)" made by TOKUSHIKI CO., Ltd. was used. As component (b): photopolymerizable acrylic compounds urethane acrylate having no urethane unit and containing a fluorine atom, a ultraviolet-curable resin (pentafunctional or more functional) "KAYARAD DPCA-120" (composed of a polymerizable acrylic compound having no urethane unit) made by Nippon Kayaku Co., Ltd., a fluorine-containing UV reactive surface modifier "MEGAFAC RS75" (containing a polymerizable acrylic compound having no urethane unit and containing fluorine with a concentration of 40.0% by weight) made by DIC Corporation, and XUA008 obtained by the above-described method were used.

Component (a) and component (b) were mixed at a quantitative ratio shown in Table 1, in which, in Table 1, an amount of component (a) and component (b) is shown in terms of an amount (% by weight) of a photopolymerizable compound contained therein. A total of the photopolymerizable compound contained in component (a) and component (b) is 100 % by weight.

Further, 5 parts by weight of a photopolymerization initiator "Irgacure 127" based on 100 parts by weight of the photopolymerizable components (component (a) and component (b)), and 2-propanol as a diluent were further added thereto so as to contain the photopolymerizable compounds with a concentration of 30% by weight.

Thus, photopolymerizable coating liquids A, B, C, D and E shown in Table 1 were obtained.

## Production of laminated film

A commercially available acrylic pressure sensitive adhesive was applied to one surface of a base material layer (thermoplastic polyurethane film "ARGOGUARD 49510" made by Argotec GmbH) by die coating, and the resulting material was dried at 70°C for 3 minutes. Thus, an adhesive layer having a thickness of 40 micrometers was formed on one surface of the base material layer.

Then, an opened surface of the adhesive layer was pressure-bonded to a polyethylene terephthalate film having a thickness of 75 micrometers release-treated with a silicon resin by using a rubber roller, and the resulting material was aged at 45°C for one day. Thus, a laminated film in which the base material layer, the adhesive layer and the release layer were in contact with each other in the order was obtained. Part of the above laminated film was used as a reference sample for measurement of a change of Young's modulus to be described later.

A laminated film for a PPF was produced from the remaining laminated film. Any of photopolymerizable coating liquids A, B, C, D and E was applied onto an opened surface of the base material layer by using a wire bar coater No. 24 made by R.D.S. Webster, N.Y., and the resulting material was dried at 90°C for 3 minutes. Then, the photopolymerizable coating liquid was cured with an integrated light amount: 400 mJ/cm$^2$ by using a fusion UV lamp-mounted belt conveyor curing unit (made by Heraeus K.K.). Thus, a coating layer having a thickness of 11 micrometers was formed on the base material layer, and a laminated film in which the coating layer, the base material layer, the adhesive layer and the release layer were in contact with each other in the order was obtained (Example 1, Example 2, Comparative Example 1, Comparative Example 2 and Comparative Example 3).

**Evaluation of laminated film**

The obtained laminated film was evaluated from viewpoints described below. The results are shown in Table 1.

**(1) Image clarity test (smoothness)**

A piece having a dimension of 50 mm × 50 mm was cut out from the laminated film, and a release film was removed from the piece. As a coated plate, an unplasticized polyvinyl chloride resin plate (Capillone, K-5930) coated with a black paint was arranged. Onto a surface of the adhesive layer of the laminated film piece and a coated surface of the coated plate, water (in which, a baby shampoo made by Johnson & Johnson K.K. was diluted to 10,000 times on volume basis) was sprayed, and then the adhesive layer surface of the laminated film was brought into contact with the coated surface, and the laminated film was pressed with a commercially available rubber squeegee while removing air bubbles and water bubbles generated between the laminated film and the coated surface, and the laminated film was pasted to the coated plate. The coated plate to which the laminated film was pasted was left to stand at room temperature until no air bubbles and water bubbles were visually observed on the surface. Thus, a test sample was completed.

An image clarity test of the test sample was conducted with a reflection angle of 45° and an optical comb width of 0.25 millimeters by using Image Clarity Meter ICM-1T (made by Suga Test Instruments Co., Ltd.). The optical comb perpendicular to a light beam axis of reflected light from the test sample was moved to determine a maximum light amount (M) and a minimum light amount (m) for a comb width of 0.25 millimeters to calculate image clarity according to the following equation:

$$\text{Image clarity (\%)} = [(M - m) / (M + m)] \times 100.$$

High image clarity means high smoothness of the surface of the coating layer. Gloss and smooth coating in appearance is generally preferred in exterior components of an automobile. A surface of the laminated film having the image clarity of below 45% is poor in gloss and smoothness in appearance, and in a so-called "orange peel surface" state. The PPF using such a laminated film having poor smoothness spoils beauty of coating of the automobile, and therefore has low desinability and is unsuitable for practical use.

**(2) Ink wiping properties (stain-proof properties and oil repellency)**

An image was drawn on a surface of the coating layer of the laminated film with a black oily marker (made by Sharpie), and a way of repellency of the oily ink was observed. Further, a drawn part was rubbed with a nonwoven fabric (Dusper K-3 by OZU CORPORATION), and wiping properties of the oily ink were observed. The observation results were judged according to the following criteria:

+: Ink was repelled and wiped off clean.
-: Ink was not wiped off.

**(3) Water repellency: water contact angle measurement**

A piece having a dimension of 20 mm × 90 mm cut out from the laminated film was pasted to a stainless steel plate having a dimension of 25 mm × 100 mm, and a water contact angle of the coating layer of the laminated film was measured using Automatic Contact Angle Meter DMs-400 (made by Kyowa Interface Science Co., Ltd.). As probe water, distilled water for nitrogen and phosphorus measurement (made by KANTO KAGAKU) was used.

**(4) Change in water contact angle (stain-proof continuity) before and after accelerated weather resistance test**

In the sample that showed stain-proof properties in the test of (2), and high water repellency in the test of (3), stain-proof continuity was evaluated. In a similar manner to the measurement of (3), a piece having a dimension of 20 mm × 90 mm cut out from the laminated film was pasted to a stainless steel plate having a dimension of 25 mm × 100 mm, and a water contact angle (before deterioration, $\theta_1$) of the coating layer of the laminated film was measured using Automatic Contact Angle Meter DMs-400 (made by Kyowa Interface Science Co., Ltd.). As probe water, distilled water for nitrogen and phosphorus measurement (made by KANTO KAGAKU) was used.

Another piece having a dimension of 20 mm × 90 mm cut out from the same laminated film was deteriorated with Ultraviolet Fluorescent lamp type Accelerated Weathering Tester QUV (made by Q-Lab Corporation). Deterioration

conditions were a cycle including the following steps 1, 2 and 3 according to ASTM G154 CYCLE 2, and 12 cycles in total were performed. A top coating layer side of the sample was irradiated with ultraviolet light.

- Step 1: irradiation with ultraviolet light (irradiation amount with ultraviolet light: 0.71 W/m$^2$, temperature: 60°C, time: 4 hours)
- Step 2: dew formation (temperature: 50°C, time: 4 hours)
- Step 3: return to step 1

The piece after completion of the deterioration treatment was pasted to a stainless steel plate having a dimension of 25 mm × 100 mm, a water contact angle (after deterioration, $\theta_2$) of the coating layer of the laminated film was measured using Automatic Contact Angle Meter DMs-400 (made by Kyowa Interface Science Co., Ltd.). As probe water, distilled water for nitrogen and phosphorus measurement (made by KANTO KAGAKU) was used.

From $\theta_1$ and $\theta_2$ thus measured, a degree of a change in the stain-proof properties of each laminated film was determined as a change in water contact angle ($\Delta\theta$) defined by the following equation:

$$\Delta\theta = |\theta_1 - \theta_2|.$$

The laminated film having a small value of $\Delta\theta$ reasonably has stain-proof properties to withstand longer or severer outdoor use.

**(5) Young's modulus contribution ratio of coating layer (flexibility)**

From the above-described laminated film in which the base material layer, the adhesive layer and the release layer were in contact with each other in the order and no coating layer was included, a piece having a dimension of 25 mm × 70 mm was cut out and the release layer was removed. A change in stress when the obtained 2-layer laminated film (reference film) in which the base material layer and the adhesive layer were in contact with each other and no coating layer was included was pulled by Strograph VG as a tensile, compression and bending tester (made by Toyo Seiki Seisaku-sho, Ltd.) was measured to obtain a stress (N/mm$^2$)-strain curve. Pulling conditions on the occasion were an initial interchuck distance: 30 mm, a crosshead moving speed: 500 mm/min and a maximum interchuck distance: 90 mm. Young's modulus ($E_1$) (MPa) of the reference film was calculated as an inclination of an initial linear region of the stress (N/mm$^2$)-strain curve, represented by the following equation:

$$\text{Young's modulus } (E_1) \text{ (MPa) of reference film} = \text{stress (N/mm}^2\text{) / strain.}$$

Also for the laminated film in which the coating layer, the base material layer, the adhesive layer and the release layer were in contact with each other in the order (Example 1, Example 2, Comparative Example 1, Comparative Example 2 and Comparative Example 3), the release layer was removed, and then a stress (N/mm$^2$)-strain curve was obtained under the identical conditions. Young's modulus ($E_2$) (MPa) of each 3-layer laminated film was calculated as an inclination of an initial linear region of the stress (N/mm$^2$)-strain curve, represented by the following formula:

$$\text{Young's modulus } (E_2) \text{ (MPa) of 3-layer laminated film} = \text{stress (N/mm}^2\text{) / strain.}$$

A degree of contribution of the coating layer in flexibility of each 3-layer laminated film was calculated as a difference ($\Delta E$) between the Young's modulus ($E_2$) of the 3-layer laminated film and the Young's modulus ($E_1$) of the standard film, represented by the following equation:

$$\text{Difference } (\Delta E) \text{ (MPa) of Young's modulus} = (E_2 - E_1).$$

In the laminated film having small $\Delta E$, the flexibility of the base material layer is maintained further even in a state in which the coating layer was formed. The PPF using such a laminated film tends to be closely adhered to the coated surface having a curved shape, and therefore is particularly suitable for a product having various surface shapes

as in the automobile.

**(6) Elongation at break (extensibility)**

A piece having a dimension of 35 mm × 200 mm was cut out from the laminated film, and the release layer was removed to prepare a laminated film in which the coating layer, the base material layer and the adhesive layer were in contact with each other in the order. The laminated film was pulled and broken by Strograph VG as a tensile, compression and bending tester (made by Toyo Seiki Seisaku-sho, Ltd.) Pulling conditions on the occasion were an initial interchuck distance: 100 mm and a crosshead moving speed: 127 mm/min. A point at which a crack was generated on a surface of the test sample was visually detected, and extensibility of the laminated film till break was determined as elongation at break (%) represented by the following equation:

Elongation at break (%) = (crosshead moving distance till break (mm) / initial interchuck distance (100 mm)) × 100.

**(7) Squeegee sliding properties (workability)**

A piece having a dimension of 40 mm × 130 mm was cut out from the laminated film, and the release layer was removed to prepare a laminated film in which the coating layer, the base material layer and the adhesive layer were in contact with each other in the order. Separately, an aluminum plate (width: 50 mm, length: 150 mm, thickness: 1.2 mm) coated with a black paint for an automobile was arranged.

Onto each of a surface of the adhesive layer of the laminated film and a coated surface of the coated plate, water (in which, a baby shampoo made by Johnson & Johnson K.K. was diluted to 10,000 times on volume basis) was sprayed, and then the adhesive layer surface of the laminated film was brought into contact with the coated surface, and the laminated film was pressed with a commercially available rubber squeegee while removing air bubbles and water bubbles generated between the laminated film and the coated surface, and the laminated film was pasted to the coated plate. Sliding properties (squeegee sliding properties) of the laminated film on the occasion were judged according to the following criteria.

+: The squeegee slid on the surface of the laminated film and the laminated film was pasted thereto without difficulty.
-: The squeegee was caught by the surface of the laminated film and the laminated film was hard to paste.

**Table 1**

| | | | Example 1 | Example 2 | Comparative Example 1 | Comparative Example 2 | Comparative Example 3 |
|---|---|---|---|---|---|---|---|
| Photopolymerizable coating liquid | | | A | B | C | D | E |
| Photopolymerizable coating liquid composition | (a) | AUP-838 (% by weight) | 49.2 | 30.2 | 0.0 | 56.0 | 10.0 |
| | (b) | KAYARAD DPCA-120 (% by weight) | 45.7 | 64.7 | 94.9 | 44.0 | 84.9 |
| | | RS75 (% by weight) | 5.0 | 5.0 | 5.0 | 0.0 | 5.0 |
| | | XUA008 (% by weight) | 0.1 | 0.1 | 0.1 | 0.0 | 0.1 |
| | (a)+(b) (% by weight) | | 100.0 | 100.0 | 100.0 | 100.0 | 100.0 |
| | Irgacure 127 (part by weight based on (a)+(b)) | | 5.0 | 5.0 | 5.0 | 5.0 | 5.0 |
| Layer structure | Coating layer | | Cured material of A | Cured material of B | Cured material of C | Cured material of D | Cured material of E |
| | Base material layer | | ARGGUARD 49510 | ARGGUARD 49510 | ARGGUARD 49510 | ARGGUARD 49510 | ARGGUARD 49510 |
| | Adhesive layer | | Acrylic adhesive | Acrylic adhesive | Acrylic adhesive | Acrylic adhesive | Acrylic adhesive |
| Evaluation | (1) Image clarity (%) | | 50 | 80 | 90 | 20 | 75 |
| | (2) Ink wiping properties | | + | + | + | - | + |
| | (3) Water repellency | | 106 | 106 | 106 | 99 | 106 |
| | (4) Δθ | | 5 | 3 | 1 | Unmeasurable | 2 |
| | (5) ΔE | | 4 | 5 | 12 | 4 | 13 |
| | (6) Elongation at break (%) | | 70 | 43 | 17 | 80 | 25 |

| | | | | | | |
|---|---|---|---|---|---|---|
| | (7) Squeegee sliding properties | + | + | + | - | + |

The laminated film of the invention (Example 1 and Example 2) has smoothness, stain-proof properties, stain-proof continuity, flexibility, extensibility and workability with a good balance. If the above laminated films are used for the PPF, manual pasting work is easy to perform, and the coated surface can be protected without spoiling beauty of the coated surface.

Moreover, the laminated film of the invention has the coating layer including AUP-838, and therefore has self-healing properties.

In contrast thereto, in Comparative Example 1 in which the coating layer does not include component (a): urethane acrylate, while smoothness, stain-proof properties and stain-proof continuity on the surface are excellent, flexibility of the base material layer is not maintained and extensibility is poor, and therefore the laminated film has a problem in use as the PPF.

In Comparative Example 2, an amount of component (b) included in the coating layer is excessively small, and therefore smoothness and stain-proof continuity required for the PPF are poor, and the laminated film is unsuitable for practical use.

In Comparative Example 3, an amount of component (b) included in the coating layer is excessively large, and therefore flexibility, extensibility and workability required for the PPF are poor, and the laminated film is unsuitable for practical use.

## Industrial Applicability

A laminated film having smoothness, stain-proof properties, stain-proof continuity, flexibility, extensibility and workability with a good balance according to the invention has a high value of utilization as a PPF. As an application target of the PPF formed of the laminated film of the invention, a wide range of targets such as, in addition to a vehicle such as an automobile and a motorbike, a vessel, a building, an electrotechnical product, an exhibit, an interior, furniture, a factory facility, industrial equipment and medical equipment can be expected.

## Reference Signs List

1 Coating layer
2 Base material layer
3 Adhesive layer
4 Release layer
5 Laminated film
6 Coated surface
7 PPF

## Claims

**1.** A laminated film, in which a coating layer formed of a cured material of a photopolymerizable coating liquid, a base material layer formed of thermoplastic polyurethane, and an adhesive layer formed of a pressure sensitive adhesive are formed in contact with each other in the order, wherein
the photopolymerizable coating liquid contains, as a photopolymerizable component, component (a): urethane acrylate and component (b): photopolymerizable acrylic compounds having no urethane unit and containing a fluorine atom, and
component (a) and component (b) are mixed at a proportion of (a): 20% by weight or more and less than 50% by weight and (b): 50% by weight or more and less than 80% by weight, based on a total amount of 100 parts by weight of the photopolymerizable component.

**2.** The laminated film according to claim 1, wherein component (b) contains a photopolymerizable acrylic polymer containing a fluorine atom and silicon.

**3.** The laminated film according to claim 1 or 2, wherein component (b) contains a structural unit derived from a fluorosilsesquioxane derivative represented by formula (1):

Formula 1

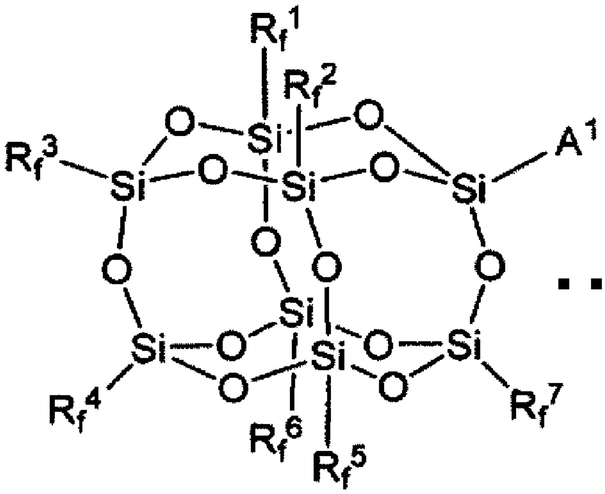

····(1)

wherein, in formula (1), $R_f^1$ to $R_f^7$ independently represent straight-chain or branched-chain fluoroalkyl having 1 to 20 carbons in which arbitrary methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and $A^1$ is a group represented by formula (1-1) or formula (1-2) :

Formula 2

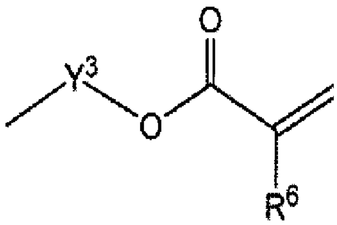

····(1-1)

wherein, in formula (1-1), $Y^3$ represents alkylene having 2 to 10 carbons, and $R^6$ represents hydrogen, or straight-chain or branched-chain alkyl having 1 to 5 carbons, or aryl having 6 to 10 carbons, and

**Formula 3**

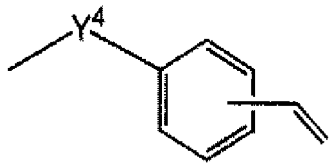

····(1-2)

wherein, in formula (1-2), $Y^4$ represents a single bond or alkylene having 1 to 10 carbons.

**4.** The laminated film according to any one of claims 1 to 3, wherein component (b) contains a structural unit derived from γ-methacryloxypropylhepta(trifluoropropyl)-T8-silsesquioxane represented by formula (1-3):

**Formula 4**

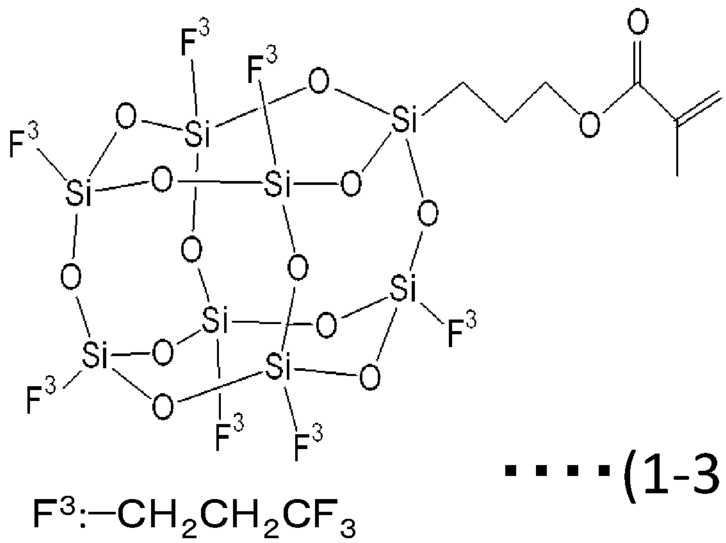

····(1-3)

$F^3$: $-CH_2CH_2CF_3$

.

**5.** A paint protection film, containing the laminated film according to any one of claims 1 to 4.

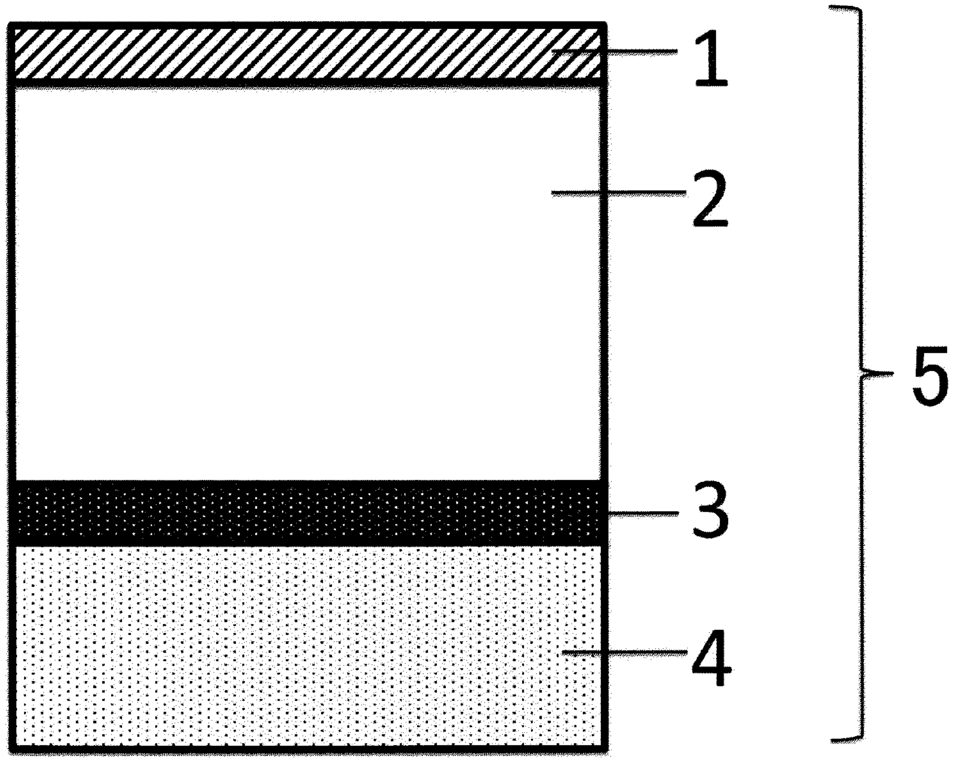


FIG. 1

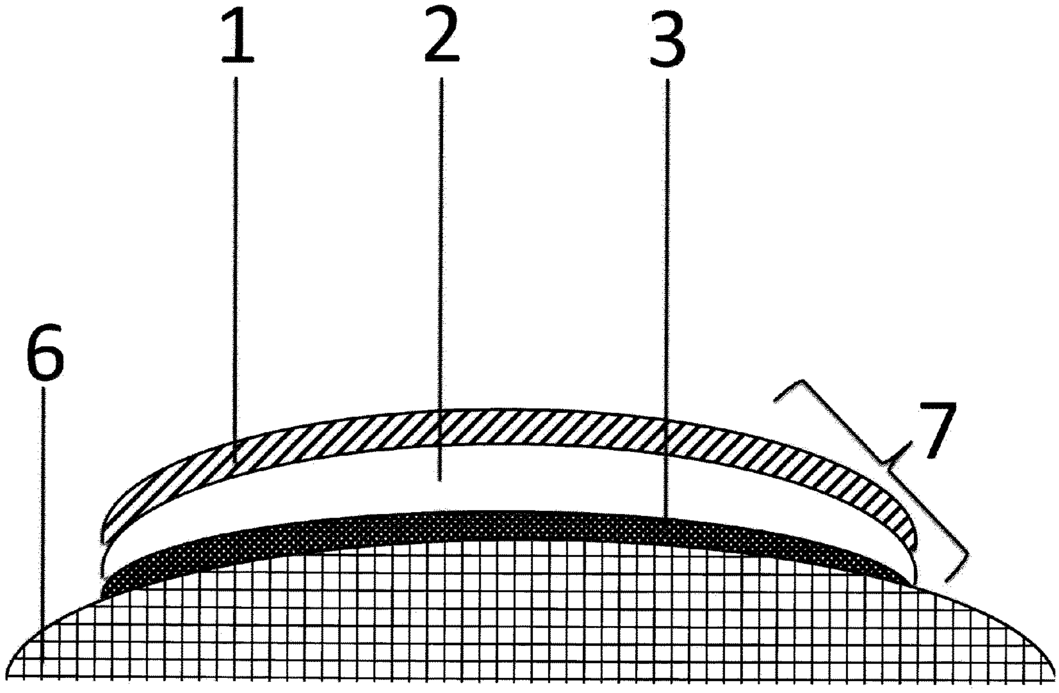


FIG. 2

**INTERNATIONAL SEARCH REPORT**

International application No.
PCT/JP2018/020147

A. CLASSIFICATION OF SUBJECT MATTER
Int.Cl. C09J7/29(2018.01)i, B32B27/30(2006.01)i, B32B27/40(2006.01)i, C09D4/02(2006.01)i, C09D133/16(2006.01)i, C09D175/14(2006.01)i, C09J201/00(2006.01)i
According to International Patent Classification (IPC) or to both national classification and IPC

B. FIELDS SEARCHED
Minimum documentation searched (classification system followed by classification symbols)
Int.Cl. C09J7/29, B32B27/30, B32B27/40, C09D4/02, C09D133/16, C09D175/14, C09J201/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2016/159023 A1 (JNC CORPORATION) 06 October 2016, claims, examples & EP 3279282 A1, claims, examples & CN 107429113 A & KR 10-2017-0132817 A & TW 201641630 A | 1-5 |
| Y | JP 1-161010 A (DAINIPPON PRINTING CO., LTD.) 23 June 1989, claims, page 6, lower left column, examples (Family: none) | 1-5 |
| A | JP 2014-91776 A (DIC CORPORATION) 19 May 2014, entire text & CN 103804969 A & KR 10-2014-0057153 A & TW 201425366 A | 1-5 |
| A | JP 2013-76029 A (TDK CORPORATION) 25 April 2013, entire text & US 2013/0084458 A1 & CN 103102793 A & TW 201323536 A | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 July 2018 (13.07.2018) | 31 July 2018 (31.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016020079 A
- JP 2008539107 A